Europäisches Patentamt

European Patent Office

Office européen des brevets

(11) Publication number: **0 333 685**
**A2**

## (12) EUROPEAN PATENT APPLICATION

(21) Application number: **89850074.9**

(22) Date of filing: **02.03.89**

(51) Int. Cl.⁴: **B 32 B 31/00**
**E 04 B 1/86**

(30) Priority: **16.03.88 SE 8800941**

(43) Date of publication of application:
**20.09.89 Bulletin 89/38**

(84) Designated Contracting States: **DE ES FR GB IT**

(71) Applicant: **SCANALMA AB**
**Box 5089**
**S-421 05 Västra Frölunda (SE)**

(72) Inventor: **Alm, Kjell**
**Box 5089**
**S-421 05 Västra Frölunda (SE)**

(74) Representative: **Kristiansen, Alf P.**
**Landalagängen 5**
**S-411 30 Gothenburg (SE)**

(54) Sandwich construction and method for the production thereof.

(57) The invention relates to a so called sandwich construction which includes at least two plates (1) or sheets having a material of different kind in between. This material consists according to the invention of fibers (3) that have been applied to one or more of the plates (1) through electrostatic deposition, so called flocking.

The invention includes also a method for the production of such sandwich constructions which means that one after the flocking operation applies an adhesive on the flock or the plate facing the flock and join these under pressure.

*Fig 1*

**Description**

**Sandwichconstruction and method for the production thereof**

The present invention relates to a so-called sandwich construction or laminate and includes also a method for the production thereof.

A great number of different types of sandwich constructions are known. They consist usually of two sheets or plates between which there is a material of softer kind. The sheets or plates may be of the same kind or different and the material between them may be uniform or composite. Instead of a relatively soft material between the sheets or plates one may have a more rigid one. The construction may also have the shape of an apertured sheet such as a honeycomb construction. Such a sandwich construction will be rigid and strong and is used i.a. as building materials, packaging materials and the like.

Most of the rigid sandwich materials are strong in relation to the strength of the materials from which they are composed, but they have the less desired property that they are difficult to shape after the lamination. Therefore they are primarily used just as plates or sheets. One of the reasons for the decreased formability is that the lamination breaks. If for instance a laminated plate is bent substantially the outer plate will be streched whereas the inner plate will be compressed, which gives rise to high stresses on the material between the plates and its attachment to the plates.

It has therefore long been a desire to bring about a sandwich construction which can be shaped to complicated structures after the lamination has taken place without deteriorating the properties of the construction. It has also been a desire that one could get a sandwich construction that could withstand relatively high temperatures during a long period of time without being substantially impaired. A further desire has been that the construction should be noise damping.

The above mentioned objects have been met by the present invention through which also the problems with the earlier known sandwich constructions have been solved and one has brought about a sandwich construction which is characterized in that it comprises at least two plates or sheets of which at least one of them has been covered by flocked fibers on the side which faces the other plate or sheet.

According to the invention it is advantageous that both plates or sheets are covered with flocked fibers.

To assure that the sandwich construction shall safely hold together it is advantageous that an adhesive has been put on one or both of the flocked surfaces if both of the plates have been flocked. If only one plate has been flocked it is of course necessary that it or the facing non-flocked surface has been coated with an adhesive.

According to the invention the sandwich construction may include three or more plates or sheets having flock in between.

If the sandwich construction shall be used at a place where it can be easily seen as for instance in a car it may according to the invention be suitable to flock it even on the outside.

The plates that shall support the flock should be electrically conductive and consist suitably of aluminium, steel or the like. The same applies if sheets shall carry the flock. If this consists of a non-conductive material it may be furnished with an electrically conductive surface for instance an electrically conductive glue.

The invention includes also a method for the production of the sandwich constructions. It consists of first applying flock in a way known per se through electrostatic deposition of fiber on an electrically conductive, adhesive surface on one or more plates or sheets and thereafter applying adhesives on at least a part of the flocked surface or on a second plate or sheet and finally join the plate or sheet or plates or sheets with the flocked surfaces facing inwardly.

The adhesive can according to the invention suitably be applied through spraying, coating or rolling. It may cover the surface completily or in strands or spots.

To assure a satisfactory strength of the sandwich construction it should according to the invention be laminated under pressure.

The invention will be further described in the following in connection with the drawings in which

fig. 1 in section shows a sandwichconstruction according to the invention consisting of two plates with flocked fibers in between and where

fig. 2 in section shows a sandwichconstruction according to the invention comprising three plates having flock in between.

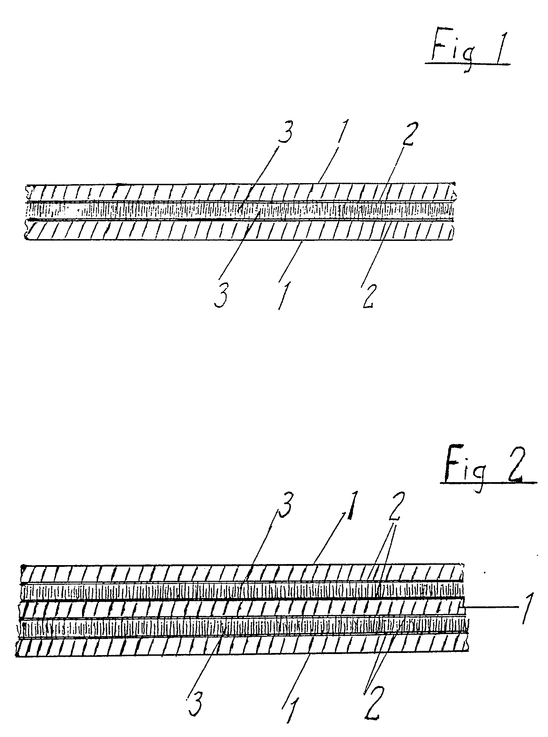

The sandwich construction shown in fig. 1 comprises two plates 1. On that side of these plates that faces the other plate an adhesive layer har been applied 2 whereafter both plates 1 have been covered with fibers 3 through electrostatic deposition. This deposition is well known and is therefore not described further here. The adhesives that are used may be of different kind depending on the requierements that are put on the construction when used later. Suitable adhesives are acrylic dispersions, polyurethane glues etc. The fibers are suitably nylon fibers. Their length may vary extensively, but a length of from a half millimeter to some millimeter is suitable for most applications.

After having covered the surfaces with flocked fibers 3 one has sprayed an adhesive on the flocked surfaces and thereafter put these against each other and let the adhesive cure under pressure. The pressure used is not critical and it may be decided on from practical reasons. It must be so high that the fibers from both sides penetrate in between each other, but a too high pressure is unnecessary.

In the present case one has sprayed the adhesive on the flocked surfaces. A good adhesion between the flocked surfaces will then be obtained. This is of course a great advantage if the sandwich construction afterwards shall be formed into complex shapes. In some cases is it however sufficient that strands of adhesives are put on the flock or that the adhesive is applied only on some spots. It may also be possible that one refrains completily from applying adhesive on the flocked surfaces. It is even not allways necessary to spray or in other ways apply adhesives to both surfaces but cover only one of them whereas the other one is free of adhesive.

Though spraying of the adhesive has been mentioned in connection with fig. 1 it is also possible to apply this in another way such as through covering or rolling.

Fig. 2 shows a modification of the sandwich construction according to fig. 1. As is shown in the figure three plates have been laminated. These have been covered with flock and adhesives and joined in the same way as the plates 1 in fig. 1, but the middle plate has contrary to the two others been flocked on both sides. This construction will then be much more rigid than the one according to fig. 1. If desired one may also flock the constructions according to fig. 1 and fig. 2 on the outer side in a way known per se. A very nice, velvet like surface is then obtained which can be used where the appearance of the construction is of importance.

The sandwich constructions according to the present invention have great advantages compared with earlier known constructions. They adhere very well together and can be formed into very complex articles through pressing, extruding, bending and punching. They have a very strong noise damping ability and are therefore well suited as noise damping covers around motors and the like. Even vibrations outside the hearing area are damped or completily eliminated. The constructions according to the invention are consequently also suitable as building elements.

If the constructions according to the invention are used together with machines or the like they will be subjected to stresses by elevated temperatures. Depending on what kind of adhesives that has been used the constructions, however, can be used at rather high temperatures, such as about two hundred centigrades.

The invention is not limited to the embodiment examples shown and it can be modified in different ways within the scope of the claims. As for example a laminate consisting of only one flocked plate that cooperates with another non-flocked plate that has not been covered with adhesives is included in the invention. Such a laminate may be held together by means of for instanse mechanical means.

## Claims

1. Sandwich construction, characterized in that it comprises at least two plates (1) or sheets of which at least one on that side which faces the other plate (1) is covered with fibers (3) through electrostatic deposition, so called flocking.

2. Sandwich construction according to claim 1, characterized in that both plates (1) or sheets are covered with flock (3).

3. Sandwich construction according to claim 1 or 2, characterized in that an adhesive has been applied on the flock (3) or the plate (1) before joining of the plates (1).

4. Sandwich construction according to any of the claims 1-3, characterized in that it comprises three or more plates (1) or sheets with flock (3) in between.

5. Sandwich construction according to any of the claims 1-4, characterized in that it is flocked also on the outer side.

6. Sandwich construction according to any of the claims 1-5, characterized in that the plates (1) consist of aluminium or steel plates or sheets having an electrically conductive surface.

7. Method for the production of sandwich constructions according to any of the claims 1-6, characterized in that one first applies flock (3) in a way known per se through electrostatic deposition of fibers on an electrically conductive, adhesive surface on one or more plates (1) or sheets and thereafter applies an adhesive on at least a part of the flocked surface or a second plate or sheet and finally join the plates (1) or sheets with the flocked surfaces directed inwardly.

8. Method according to claim 6, characterized in that the adhesive is applied through spraying, covering or rolling.

9. Method according to any of the claims 7 or 8, characterized in that the joining of the plates is carried out under pressure.

Fig 1

Fig 2